# EUROPÄISCHE PATENTANMELDUNG

(11) **EP 1 914 387 A1**
(43) Veröffentlichungstag der Anmeldung: **23.04.2008**
(21) Anmeldenummer: 06021971.4
(22) Anmeldetag: 19.10.2006
(51) Int. Cl.: F01D 11/00, F01D 25/34, F01D 25/36, F02C 7/28, F16J 15/34

(54) **Turbomaschine und Verfahren zum Turnen einer Turbomaschine**

(71) Anmelder: SIEMENS AKTIENGESELLSCHAFT, 80333 München (DE)
(72) Erfinder: Kuhlenbeck, Markus, 47441 Moers (DE); Meyer, Franz-Josef, 46446 Emmerich (DE); Zacharias, Wolfgang, 47198 Duisburg (DE); Zimmermann, Ralf, 26624 Südbrookmerland (DE)

(57) **Zusammenfassung**

Die Erfindung betrifft eine Turbomaschine (1) mit einem Rotor (2) und einer Trockengasdichtung (3). Beim Turnen von Turbomaschinen (1) halten herkömmliche Turnvorrichtungen (60) eine Drehzahl oberhalb der Übergangsdrehzahl der Lager und der Abhebedrehzahl der Trockengasdichtung (3) ein, um Beschädigungen zu vermeiden. Dies bedingt eine entsprechend große Dimensionierung der Turnvorrichtung (60). Abweichens hiervon schlägt die Erfindung vor, die Turnvorrichtung derart auszubilden, dass das Turnen des Rotors (2) bei einer Drehzahl unter 10 Umdrehungen/Minute, vorzugsweise unter 1 Umdrehung/Minute erfolgt.

## Beschreibung

Die Erfindung betrifft eine Turbomaschine mit einem Rotor und mindestens einer Wellendichtung, wobei die Wellendichtung als Trockengasdichtung ausgebildet ist, aufweisend mindestens eine Gleitfläche, welche mit einer Gleitfläche am Rotor dichtend zusammenwirkt, welche Turbomaschine eine Turnvorrichtung aufweist, welche zur Drehung des Rotors bei einer bestimmten Turndrehzahl ausgebildet ist. Daneben beschäftigt sich die Erfindung mit einem Verfahren zum Turnen eines Rotors einer Turbomaschine bei einer bestimmten Turndrehzahl, welche Turbomaschine eine Trockengasdichtung als Wellendichtung am Rotor aufweist, wobei die Trockengasdichtung mindestens eine Gleitfläche aufweist, welche mit einer Gleitfläche am Rotor dichtend zusammenwirkt.

Die Anwendung von Trockengasdichtungen bei der Kompression von Prozessgas hat in den vergangenen 20 Jahren stark zugenommen und die traditionellen Ölfilmdichtungen in den meisten Anwendungen ersetzt. Mittlerweile werden über 80% der Prozessgaskompressoren mit Trockengasdichtungen (dry gas seals) hergestellt. Die Beliebtheit von Trockengasdichtungen ist einerseits in der hervorragenden Dichtungswirkung dieses Prinzips und andererseits in der Langlebigkeit solcher Anordnung begründet.

Die europäische Patentanmeldung EP 0 781 948 A1, die deutsche Patentschrift DE 42 29 081 C1 und DE 39 25 404 C2 beschäftigen sich jeweils mit konstruktiven Details von Trockengasdichtungen.

Im Wesentlichen bestehen Trockengasdichtungen aus zwei sich gegenüberstehenden Gleitflächen, von denen eine rotierend mit dem Rotor verbunden ist und die andere stehend an einem Gehäuse befestigt ist. Während des Betriebes sorgen speziell konturierte Ausnehmungen in einer der beiden meist ringförmig ausgebildeten Gleitflächen für eine fluiddynamische Kraft, die zum Abheben der beiden Gleitflächen voneinander führt, welches dadurch erzeugte Betriebsspiel eine verschleißfreie Relativbewegung der beiden Gleitflächen zueinander gewährleistet. Die meist für Kompressoren eingesetzten Trockengasdichtungen benötigen ein Versorgungssystem, welches eine gewisse Menge an Dichtungsgas bereitstellt. Trockengasdichtungen können ein- oder mehrstufig ausgebildet und bisweilen auch mit einer beispielsweise vorhergehenden Labyrinthdichtung kombiniert sein.

Insbesondere bei der Förderung heißer Medien oder aufgrund von Forderungen der Antriebsmaschine (z. B. einer Turbine) sieht sich der Betreiber eines derartigen Kompressorstranges mit einer Trockengasdichtung vor das Problem gestellt, bei einem Abschalten des Kompressors diesen fortgesetzt bewegen zu müssen, um eine Verkrümmung des Rotors des Kompressors oder der Antriebsmaschine während des Abkühlens zu vermeiden und gleichzeitig eine Beschädigung der Trockengasdichtungen vermeiden zu müssen. Hierzu ist es erforderlich, dass die Drehung des Rotors oberhalb einer Abhebedrehzahl der Gleitflächen der Trockengasdichtung (ca. 100 - 600 Umdrehungen/Minute) und oberhalb der Übergangsdrehzahl der Lager (ca. 20 - 50 Umdrehungen/Minute) erfolgt. Die Abhebedrehzahl der Trockengasdichtung ist abhängig von der Druckdifferenz über jedes einzelne Dichtelement sowie der Dichtungsgröße und der Gasart (Viskosität). Bei einem nur geringen Überdruck kann dies durchaus eine Drehzahl von bis zu 1000 Umdrehungen/Minute erforderlich machen. Bei entsprechender Größe des Kompressors beispielsweise bei einem mittels einer Gasturbine angetriebenen Kompressor einer Gasverflüssigungsanlage, muss zusätzlich zur Gasturbine ein entsprechend stark dimensionierter Elektromotor vorgesehen werden, damit weder der Rotor durch eine Verkrümmung noch die Trockengasdichtung durch einen unzulässigen Betrieb zerstört werden. Teilweise ist eine konstruktive Lösung aufgrund der Größe dieses Turnantriebes mittels eines Elektromotors nicht mehr möglich.

Die Erfindung hat es sich daher zur Aufgabe gemacht, eine kostengünstige und sichere Lösung für das Turnen einer Turbomaschine mit einer Trockengasdichtung, insbesondere eines Turbokompressors zu schaffen.

Zur Lösung der erfindungsgemäßen Aufgabe wird vorgeschlagen, dass die Turnvorrichtung derart ausgebildet ist, dass die Turndrehzahl weniger als 10 Umdrehungen/Minute beträgt und kontinuierlich dreht. Daneben schlägt die Erfindung ein Verfahren zum Turnen der eingangs genannten Art vor, bei welchem die Turndrehzahl unter 10 Umdrehungen/Minute bei kontinuierlicher Drehung beträgt.

Der wesentliche Vorteil der erfindungsgemäßen Lösung besteht in der gewaltigen Kosteneinsparung bei der Dimensionierung und dem Betrieb der Turnvorrichtung, da diese im Vergleich zu herkömmlichen Turnvorrichtungen den Rotor lediglich mit einer ca. 100 - 1000-fach geringeren Drehzahl bewegen muss. Dementsprechend ist der Leistungsbedarf der Turnvorrichtung sehr viel geringer und sowohl der Antrieb als auch die nachfolgenden Getriebekomponenten können für eine geringere Leistung ausgelegt werden. Darüber hinaus sinkt auch der Energiebedarf für den Turnbetrieb. Die Grundlage der Erfindung ist die überraschende Erkenntnis, dass Trockengasdichtungen und Lager nicht nur oberhalb der so genannten Abhebedrehzahl über einen ausreichend langen Zeitraum (ca. 5000 Stunden) beschädigungsfrei betrieben werden können, sondern auch mit einer ganz geringen Drehzahl.

Bevorzugt beträgt die Turndrehzahl unter 1 Umdrehung/Minute, insbesondere 0,2 Umdrehungen/Minute, weil hierbei ein etwaiger Verschleiß sehr gering ist und Energie zum Antrieb eingespart wird bzw. ein Verkrümmen noch mit hinreichender Sicherheit verhindert werden kann.

Eine bereits bekannte Methode den Rotor vor thermisch bedingten bleibenden Verkrümmungen mittels einer niedrigen Drehzahl zu schützen liegt in der Möglichkeit des diskontinuierlichen Bewegens, bei welchem der Rotor in bestimmten Abständen um einen jeweils bestimmten Winkel gedreht wird. Dies erfolgt entweder als ein so genanntes Knippen (händisches Drehen eines Rotors mittels einer Ratsche bei einer sehr geringen Drehzahl) oder dem Bewegen mittels einer Hubkolbendrehvorrichtung.

Diese Methoden haben jedoch den Nachteil, dass gesonderte Montage und personalaufwändige Betätigungsverrichtungen notwendig sind. Hierbei ist auch stets das erhöhte Risiko des menschlichen Versagens gegeben.

Die Erkenntnisse, auf denen die Erfindung beruht, zeigen jedoch, dass ein kontinuierliches Drehen des Rotors auch über einen längeren Zeitraum von mindestens 500 und bis zu 10.000 Stunden bei einer Drehzahl in der Größenordnung von unter 10 Umdrehungen/Minute keine Beschädigung der Trockengasdichtung oder eines Lagers des Turbostranges zur Folge hat. Die Erfindung überkommt damit das Vorurteil, dass nur ein diskontinuierliches Drehen des Läufers mit einer Drehzahl sehr geringer Größenordnung - also ein Knippen - dauerhaft ertragen werden kann. Aufgrund dieser überraschenden Erkenntnis schlägt die Erfindung vor, die Turnvorrichtung derart auszubilden, dass sie für ein Drehen des Rotors bei entsprechend niedriger Drehzahl, nämlich unterhalb von 10 Umdrehungen/Minute, geeignet ist.

Eine vorteilhafte Weiterbildung der Erfindung sieht vor, dass die Turnvorrichtung mindestens einen Motor und ein Getriebe aufweist, wobei das Getriebe mit einer derart ausgebildeten Übersetzung versehen ist, dass sich eine Drehzahl des Rotors unterhalb von 10 Umdrehungen/Minute einstellt.

Im Folgenden ist die Erfindung anhand eines speziellen Ausführungsbeispiels unter Bezugnahme auf Zeichnungen zur Verdeutlichung näher beschrieben. Es zeigen:
- Figur 1: einen Schnitt durch ein Dichtelement einer Trockengasdichtung eines Turbokompressors und
- Figur 2: den Zusammenhang zwischen zulässigen Drehzahlen und dem Druck an einer Dichtung sowie den Sperrbereich aufgrund der Übergangsdrehzahl der Lager.

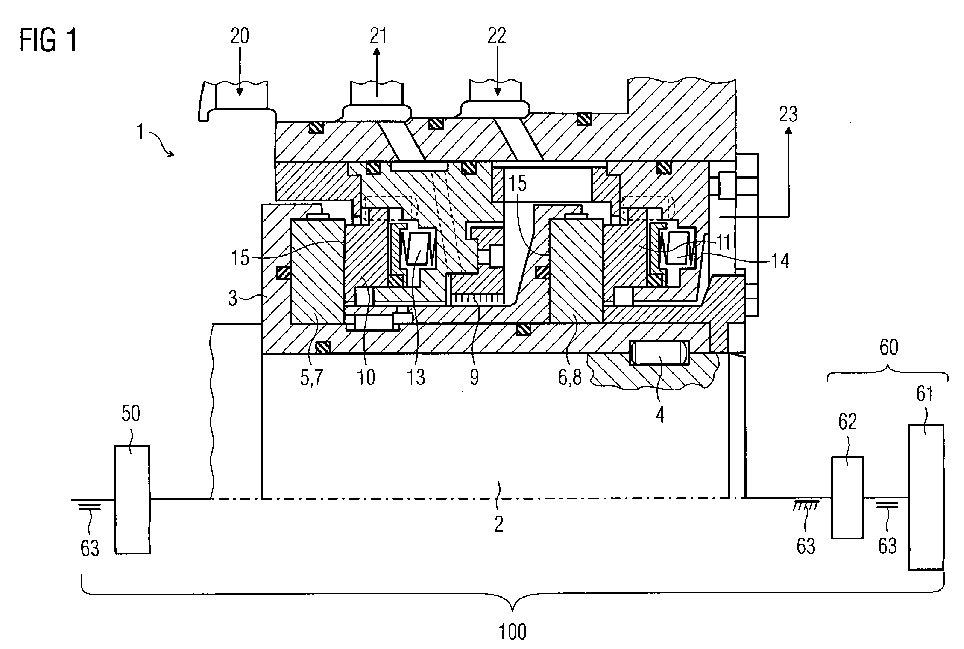

Figur 1 zeigt einen Turbostrang 100 mit einer Trockengasdichtung 1, die gegen einen Rotor 2 eines Turbokompressors 50 dichtet, welcher nicht näher dargestellt ist. Auf der linken Seite der dargestellten Trockengasdichtung befindet sich Prozessgas bzw. der Kompressor 50 und zur rechten Seite ist in der Folge ein Getriebe 62 und ein als Turbine ausgebildeter Antrieb 61 dargestellt. Der gesamte Strang weißt an verschiedenen Stellen Lagerungen 63, 64 auf welche nicht näher dargestellt sind auf. An dem Rotor 2 ist sich mitdrehend ein sich in Umfangsichtung der Rotors 2 erstreckender Träger 3 mittels einer Passfeder 4 drehstarr befestigt, welcher Träger sich in Umfangsrichtung erstreckende Gleitelemente 5, 6, ein erstes Gleitelement 5 und ein zweites Gleitelement 6 einer ersten Trockengasdichtung 7 und einer zweiten Trockengasdichtung 8 trägt. Zwischen der ersten Trockengasdichtung 7 und der zweiten Trockengasdichtung 8 befindet sich eine zusätzliche Labyrinthdichtung 9. Mittels jeweils eines elastischen Elementes 13, 14 ist an das erste Gleitelement 5 bzw. das zweite Gleitelement 6 ein erstes Gleitgegenstück 10 der ersten Trockengasdichtung 7 bzw. ein zweites Gleitgegenstück 11 der zweiten Trockengasdichtung 8 angedrückt.

In Abhängigkeit von dem an der Dichtung anstehenden Druck bildet sich jeweils zwischen dem Gleitstück 7, 8 und dem Gegengleitstück 10, 11 ein Fluid- bzw. Gasfilm beginnend mit einer bestimmten Abhebedrehzahl, so dass die Trockengasdichtung 1 verschleißfrei die Relativrotationsbewegung aufnimmt. Gleichzeitig ereignet sich über den Abhebefilm 15, welche nur wenige Tausendstel Millimeter dick ist, ein verhältnismäßig großer Druckverlust bei einem nur sehr geringen Volumenstrom. Die sich hieraus ergebende Dichtigkeit ist unter anderem anhängig von der Vorspannkraft des elastischen Elementes 13 bzw. 14. Je höher die Vorspannkraft ist, desto geringer ist die sich ergebende Leckage und desto höher ist die Abhebedrehzahl.

Auf der Seite der ersten Trockengasdichtung 7, wo die Trockengasdichtung zum nicht dargestellten Lager hin abdichtet, befindet sich eine Absaugung 21, mittels welcher die Leckage des Prozessgases 20 und das aus der Labyrinthdichtung 9 in die Absaugung 21 eintretende Dichtungsgas 22 abgesaugt wird. Auf der Seite des Kompressors ist die erste Trockengasdichtung mittels Prozessgases 20 beaufschlagt.

Die Labyrinthdichtung 9 wird mit einem zweiten Dichtungsgas 22 von der Lagerseite her mit einem höheren Druck beaufschlagt, als derjenige, welcher sich lagerseitig der ersten Trockengasdichtung einstellt. Auf diese Weise ist sichergestellt, dass kein Prozessgas die Umgebung erreicht. Das Gemisch aus dem Dichtungsgas und dem Prozessgas tritt in die Absaugung 21 zur nachfolgenden Aufbereitung ein. Die zweite Trockengasdichtung 8 dichtet gegen das zweite Dichtungsgas 22 zur Lagerseite hin ab. Die Leckage des zweiten Dichtungsgases wird mittels eines zweiten Abzuges 23 gemeinsam mit eingesogenem Umgebungsmedium zur Aufbereitung abgeführt.

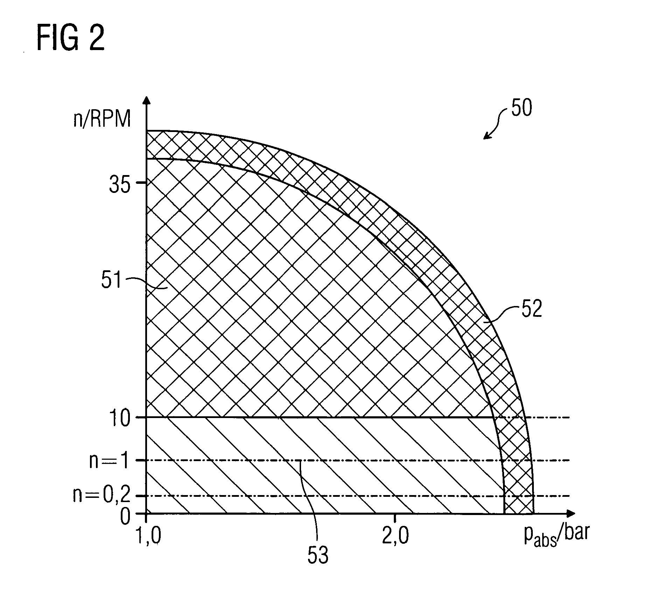

Figur 2 zeigt unzulässige Drehzahlen in einem Diagramm 50 mittels einer gekreuzt schraffierten Zone 51. In dem Diagramm 50 ist der gesamte nach herkömmlichen Erkenntnissen hinsichtlich der Trockengasdichtung 1 unerlaubte Bereich der Drehzahlen n begrenzt durch den in dem Diagramm ebenfalls gekreuzt schraffierten Begrenzungsbereich 52, die Ordinate sowie die Abszisse. Die Begrenzungslinie 52 beschreibt die Abhebedrehzahl der Trockengasdichtung 2 in Abhängigkeit von dem anstehenden Druck. Die aufgeführten Werte sind bezüglich der Abhebedrehzahl der Trockengasdichtung lediglich beispielhaft, weil in Abhängigkeit von dem Prozessgas die Werte stark variieren können. Es wurde bisher davon ausgegangen, dass die Gleitflächen der Trockengasdichtung bei einer Drehzahl unterhalb der Abhebedrehzahl beschädigt werden. Überraschend wurde jedoch festgestellt, dass in einem Bereich niedriger Drehzahlen 53 das Drehen bzw. Turnen des Rotors 2 keine Beschädigung der Trockengasdichtungen verursacht. Das Turnen liegt erfindungsgemäß bei einer Drehzahl unterhalb der Übergangsdrehzahl der Lager, die etwa bei 10 (ggf 10-20) Umdrehungen/Minute liegen kann, erfolgen. Die Übergangsdrehzahl ist der Übergang von der Mischreibung in die Etablierung eines hydrodynamischen Schmierfilms. Bevorzugt liegt die Turndrehzahl bei unter 1 Umdrehung/Minute, was einen besonders geringen Verschleiß bei gleichzeitig nur geringem Energieverbrauch zum Turnen zur Folge hat. Einen gerade noch sicheren Abstand zur Gefahr des Verkrümmens und minimaler Verschleiß stellt sich ein, wenn die Turndrehzahl etwa 0,2 Umdrehungen/Minute beträgt.

Dementsprechend ist eine in Figur 1 dargestellte Turnvorrichtung 60 mit einem Motor 61 und einem mehrstufigen Getriebe 62 derart ausgebildet, dass sich im Turnbetrieb eine Drehzahl von etwa 0,2 Umdrehungen/Minute einstellt. Das Getriebe 62 ist hierbei derart dimensioniert, dass ein herkömmlicher elektrischer Motor 61 kostengünstig eingesetzt werden kann, um ein kontinuierliches Drehen bzw. Turnen im Bereich einer Knippdrehzahl, also bei etwa 0,2 Umdrehungen/min bis zu 10 Umdrehungen/min zu realisieren.

## Patentansprüche

1. Turbomaschine (1) mit einem Rotor (2) und mindestens einer Wellendichtung, wobei die Wellendichtung als Trockengasdichtung (3) ausgebildet ist, aufweisend mindestens eine Gleitfläche, welche im Betrieb mit einer Gleitfläche am Rotor dichtend zusammenwirkt, welche im Turbomaschinenstrang (1)mindestens eine Turnvorrichtung (60) aufweist, welche zur Drehung des Rotors (2) bei einer Turndrehzahl (n) ausgebildet ist,
**dadurch gekennzeichnet,**
**dass** die Turnvorrichtung (60) derart ausgebildet ist, dass die Turndrehzahl (n) weniger als 10 Umdrehungen/Minute beträgt und kontinuierlich dreht.

2. Turbomaschine nach Anspruch 1,
**dadurch gekennzeichnet,**
**dass** die Turnvorrichtung (60) einen Motor (61) und ein Getriebe zwischen dem Motor (61) und dem Rotor (2) aufweist, welches Getriebe mit einem derartigen Übersetzungsverhältnis ausgebildet ist, dass sich eine Turndrehzahl unter 10 Umdrehungen/Minute einstellt.

3. Turbomaschine nach einem der vorhergehenden Ansprüche,
**dadurch gekennzeichnet,**
**dass** die Turbomaschine ein Kompressor ist.

4. Turbomaschine nach einem der vorhergehenden Ansprüche,
**dadurch gekennzeichnet,**
**dass** die Trockengasdichtung (3) als eine Tandemdichtung mit zwei einzelnen Trockengasdichtungen (7, 8) ausgebildet ist.

5. Turbomaschine nach Anspruch 4,
**dadurch gekennzeichnet,**
**dass** zwischen den zwei Trockengasdichtungen (7, 8) eine Labyrinthdichtung angeordnet ist.

6. Turbomaschine nach einem der Ansprüche 1 - 3,
**dadurch gekennzeichnet,**
**dass** die Trockengasdichtung (3) als eine Doppeldichtung mit zwei einzelnen Trockengasdichtungen (7, 8) ausgebildet ist.

7. Turbomaschine nach einem der Ansprüche 1 - 3,
**dadurch gekennzeichnet,**
**dass** die Trockengasdichtung (3) als eine Trippeldichtung mit drei einzelnen Trockengasdichtungen (7, 8) ausgebildet ist.

8. Verfahren zum Turnen eines Rotors (2) einer Turbomaschine (1) mittels einer motorbetriebenen Turnvorrichtung (60) bei einer Turndrehzahl (n), welche eine Trockengasdichtung (3) als Wellendichtung am Rotor (2) aufweist,
**dadurch gekennzeichnet,**
**dass** die Turndrehzahl (n) unter 10 Umdrehungen/Minute bei kontinuierlicher Drehung beträgt.

9. Verfahren nach Anspruch 8,
**dadurch gekennzeichnet,**
**dass** die Trockengasdichtung (3) eine Gleitfläche aufweist, die mit einer Gleitfläche am Rotor (2) dichtend zusammenwirkt, wobei bei einer Abhebedrehzahl der Trockengasdichtung (3) sich ein Schmierfilm zwischen den Gleitflächen etabliert, **dadurch gekennzeichnet, dass** die Turndrehzahl (n) weniger als 10 Umdrehungen/Minute beträgt.

10. Verfahren nach Anspruch 9,
**dadurch gekennzeichnet,**
**dass** die Turndrehzahl (n) weniger als 1 Umdrehung/Minute, insbesondere 0,2 Umdrehung/Minute beträgt.
